# EUROPEAN PATENT APPLICATION

(11) **EP 4 290 641 A1**
(43) Date of publication of application: **13.12.2023**
(21) Application number: 22749723.7
(22) Date of filing: 02.02.2022
(51) Int. Cl.: H01M 10/058, H01M 4/64

(54) **NONAQUEOUS ELECTROLYTE SECONDARY BATTERY**

(30) Priority: 08.02.2021 JP 2021018435
(71) Applicant: Panasonic Energy Co., Ltd., Moriguchi-shi, Osaka, 570-8511 (JP)
(72) Inventor: KOMORI, Miho, Kadoma-shi, Osaka 571-0057 (JP); KOBAYASHI, Kei, Kadoma-shi, Osaka 571-0057 (JP); SAKIDA, Takafumi, Kadoma-shi, Osaka 571-0057 (JP)
(74) Representative: Novagraaf International SA
(86) International application number: PCT/JP2022/003994
(87) International publication number: WO 2022/168852

(57) **Abstract**

A nonaqueous electrolyte secondary battery according to one embodiment of the present invention is provided with: a positive electrode which comprises a positive electrode core body and a positive electrode mixture layer that is provided on the positive electrode core body; and a negative electrode which comprises a negative electrode core body and a negative electrode mixture layer that is provided on the negative electrode core body. The 0.2 percent proof stress of the positive electrode core body is larger than the 0.2 percent proof stress of the negative electrode core body. It is preferable that the 0.2 percent proof stress of the positive electrode core body is not less than 1.05 times the 0.2 percent proof stress of the negative electrode core body.

## Description

### TECHNICAL FIELD

The present disclosure generally relates to a non-aqueous electrolyte secondary battery.

### BACKGROUND ART

In a non-aqueous electrolyte secondary battery such as a lithium-ion battery, a positive electrode and a negative electrode are disposed so as to face each other so that a mixture layer of the negative electrode is necessarily positioned at a position facing a mixture layer of the positive electrode with a separator interposed therebetween such that metal lithium should not precipitate on the negative electrode. However, repeated charge and discharge of the battery, for example, increase the pressure inside the battery due to expansion of the negative electrode mixture layer, which increases a pressure load to the electrode plate, leading to elongation of the electrode plate. In a conventional non-aqueous electrolyte secondary battery, the negative electrode is designed to be one size larger than the positive electrode in order to keep the positive electrode mixture layer and the negative electrode mixture layer facing each other even when the positive electrode is elongated due to charge and discharge.

In order to improve battery performance, various investigations have been conventionally made on a core of the electrode plate (for example, see Patent Literatures 1 to 4). Patent Literature 1 discloses aluminum alloy foil for a positive electrode core having a tensile strength of greater than or equal to 180 MPa and a 0.2% proof stress of greater than or equal to 160 MPa. Patent Literature 2 discloses aluminum alloy foil for a positive electrode core having a tensile strength of greater than or equal to 220 MPa and a 0.2% proof stress of greater than or equal to 180 MPa. There is no description on physical properties of a negative electrode core in Patent Literatures 1 and 2.

Patent Literature 3 discloses electrolytic copper foil for a negative electrode core having a 0.2% proof stress of greater than or equal to 18 kgf/mm² and less than or equal to 25 kgf/mm² and an elongation percentage of greater than or equal to 10%. Patent Literature 4 discloses electrolytic copper foil for a negative electrode core having a 0.2% proof stress of greater than or equal to 250 N/mm² and an elongation of greater than or equal to 2.5%. There is no description on physical properties of a positive electrode core in Patent Literatures 3 and 4.

### CITATION LIST

### PATENT LITERATURE

PATENT LITERATURE 1: International Publication 2013/018161
PATENT LITERATURE 2: International Publication 2013/018162
PATENT LITERATURE 3: International Publication 2008/132987
PATENT LITERATURE 4: Japanese Unexamined Patent Application Publication No. 2012-151106

### SUMMARY

### TECHNICAL PROBLEM

As noted above, in the conventional non-aqueous electrolyte secondary battery, the negative electrode is designed to be formed one size larger than the positive electrode in order not to generate a region not facing the negative electrode in the positive electrode mixture layer even when the positive electrode is elongated due to charge and discharge. However, the design having a margin of a size of the negative electrode with respect to the positive electrode is unpreferable with considering an increase in the battery capacity. Since amounts of elongation of the negative electrode and positive electrode with charge and discharge have not been considered at all conventionally, it has been difficult to attempt to increase the capacity of the non-aqueous electrolyte secondary battery by reducing a difference in size of the positive electrode and the negative electrode.

It is an object of the present disclosure to provide a non-aqueous electrolyte secondary battery that can inhibit more certainly the generation of the region not facing the negative electrode in the positive electrode mixture layer even when the difference in size of the positive electrode and the negative electrode is reduced.

### SOLUTION TO PROBLEM

A non-aqueous electrolyte secondary battery according to the present disclosure is a non-aqueous electrolyte secondary battery comprising: a positive electrode having a positive electrode core and a positive electrode mixture layer provided on the positive electrode core; and a negative electrode having a negative electrode core and a negative electrode mixture layer provided on the negative electrode core, wherein a 0.2% proof stress of the positive electrode core is larger than a 0.2% proof stress of the negative electrode core.

### ADVANTAGEOUS EFFECT OF INVENTION

According to the non-aqueous electrolyte secondary battery according to the present disclosure, the generation of the region not facing the negative electrode in the positive electrode mixture layer may be more certainly inhibited even when the electrode plate is elongated due to charge and discharge. Thus, for example, the difference in size of the positive electrode and the negative electrode can be reduced, that is, the positive electrode can be enlarged, and an attempt can be made to increase the battery capacity.

### BRIEF DESCRIPTION OF DRAWINGS

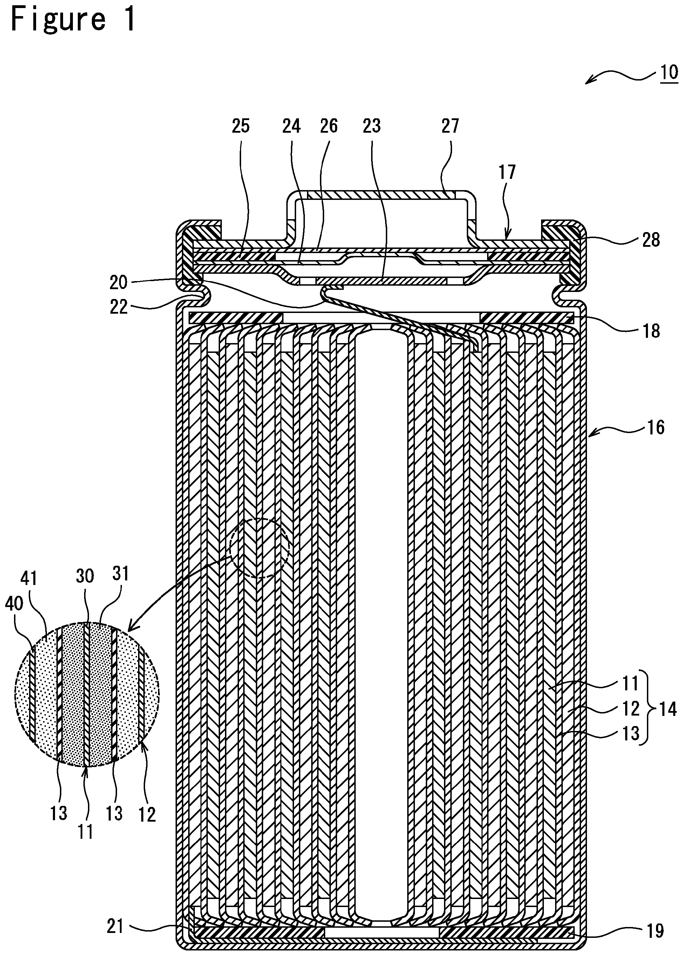

FIG. 1 is a sectional view of a non-aqueous electrolyte secondary battery of an example of an embodiment.

### DESCRIPTION OF EMBODIMENTS

The present inventors have made intensive investigation to solve the above problem, and consequently have found that the strength of the core of the electrode plate, specifically a yield stress of the core, significantly affects the elongation of the electrode plate with charge and discharge. When a tensile stress is applied to the electrode plate core, the stress and strain are proportional in a low-strain region, and the size of the core returns to the original size upon removal of the load. This region where the size of the core returns to the original size upon removal of the load is called an elastic region. When the stress is further applied to the core, at a certain point, the size of the core never returns to the original size even upon removal of the stress. This region is called a plastic region, and the proportional relationship between the stress and the strain is not satisfied in the plastic region. The point at which the elastic region changes to the plastic region is called an yield point, and a stress at the yield point is called an yield stress. In the conventional battery, an elastic region of the positive electrode core is smaller than an elastic region of the negative electrode core.

An expansion ratio of the negative electrode mixture layer increases due to repeated charge and discharge of the battery. Then, a pressure load applied to the electrode plate gradually increases, and the strain of the electrode plate exceeds the elastic region to reach the plastic region. In this case, the length of the electrode plate is not returned to the original length even when the battery is discharged to release the pressure load. That is, when an amount of plastic deformation of the positive electrode increases compared with the negative electrode with charge and discharge, an amount of elongation of the positive electrode increases compared with the negative electrode. As a result, the region not facing the negative electrode in the positive electrode mixture layer may be generated. The present disclosure has been made based on such findings by the present inventors.

According to the non-aqueous electrolyte secondary battery according to the present disclosure, the generation of the region not facing the negative electrode in the positive electrode mixture layer at an end of the positive electrode may be more certainly inhibited even with repeated charge and discharge by setting a 0.2% proof stress of the positive electrode core to be larger than a 0.2% proof stress of the negative electrode core. In this case, a difference in the amounts of plastic deformation accumulated in the positive electrode and the negative electrode may be reduced, or the amount of plastic deformation of the positive electrode may be smaller than that of the negative electrode, and the generation of the region not facing the negative electrode is highly inhibited. Note that, the yield point does not obviously appear depending on the material in some cases, and thus the present disclosure uses the 0.2% proof stress instead of the yield point.

Hereinafter, an example of embodiments of the non-aqueous electrolyte secondary battery according to the present disclosure will be described in detail with reference to Drawings. Note that, the present disclosure includes selectively combining a plurality of embodiments and modified examples described below.

Hereinafter, a cylindrical battery in which a wound electrode assembly 14 is housed in a bottomed cylindrical exterior housing can 16 will be exemplified, but the exterior of the battery is not limited to a cylindrical exterior housing can, and may be, for example, a rectangular exterior housing can (rectangular battery), a coin-shaped exterior housing can (coin-shaped battery), or an exterior composed of laminated sheets including a metal layer and a resin layer (laminated battery). The electrode assembly may be a stacked electrode assembly in which a plurality of positive electrodes and a plurality of negative electrodes are alternately stacked with a separator interposed therebetween.

FIG. 1 is a view schematically illustrating a cross section of a non-aqueous electrolyte secondary battery 10 of an example of an embodiment. As illustrated in FIG. 1, the non-aqueous electrolyte secondary battery 10 comprises the wound electrode assembly 14, a non-aqueous electrolyte, and the exterior housing can 16 housing the electrode assembly 14 and the non-aqueous electrolyte. The electrode assembly 14 has a positive electrode 11, a negative electrode 12, and a separator 13, and has a wound structure in which the positive electrode 11 and the negative electrode 12 are spirally wound with the separator 13 interposed therebetween. The exterior housing can 16 is a bottomed cylindrical metallic container having an opening on one side in an axial direction, and the opening of the exterior housing can 16 is sealed with a sealing assembly 17. Hereinafter, for convenience of description, the sealing assembly 17 side of the battery will be described as the upper side, and the bottom side of the exterior housing can 16 will be described as the lower side.

The non-aqueous electrolyte includes a non-aqueous solvent and an electrolyte salt dissolved in the non-aqueous solvent. For the non-aqueous solvent, esters, ethers, nitriles, amides, a mixed solvent of two or more thereof, and the like are used, for example. The non-aqueous solvent may contain a halogen-substituted derivative in which hydrogen of these solvents is at least partially replaced with a halogen element such as fluorine. An example of the non-aqueous solvent is ethylene carbonate (EC), ethyl methyl carbonate (EMC), dimethyl carbonate (DMC), a mixed solvent thereof, or the like. For the electrolyte salt, a lithium salt such as LiPF₆ is used, for example. The non-aqueous electrolyte is not limited to a liquid electrolyte but may be a solid electrolyte.

The positive electrode 11, the negative electrode 12, and the separator 13, which constitute the electrode assembly 14, are all a band-shaped elongated body, and spirally wound to be alternately stacked in a radial direction of the electrode assembly 14. To prevent precipitation of lithium, the negative electrode 12 is formed to be one size larger than the positive electrode 11. That is, the negative electrode 12 is formed to be longer than the positive electrode 11 in a longitudinal direction and a width direction (short direction). Two separators 13 are formed to be one size larger than at least the positive electrode 11, and disposed to sandwich the positive electrode 11. The electrode assembly 14 has a positive electrode lead 20 connected to the positive electrode 11 by welding or the like and a negative electrode lead 21 connected to the negative electrode 12 by welding or the like.

Although details will be described later, by setting a 0.2% proof stress of a positive electrode core 30 to be larger than a 0.2% proof stress of a negative electrode core 40 in the non-aqueous electrolyte secondary battery 10, the amount of plastic deformation of the positive electrode 11 due to charge and discharge may be smaller than the amount of plastic deformation of the negative electrode 12. Thus, although the negative electrode 12 is preferably larger than the positive electrode 11, the difference in size of the positive electrode 11 and the negative electrode 12 can be reduced compared with the conventional battery, and an attempt can be made to increase the capacity of the non-aqueous electrolyte secondary battery 10 by using a larger positive electrode 11.

Insulating plates 18 and 19 are disposed on the upper and lower sides of the electrode assembly 14, respectively. In the example illustrated in FIG. 1, the positive electrode lead 20 extends through a through hole of the insulating plate 18 toward the sealing assembly 17 side, and the negative electrode lead 21 extends through an outside of the insulating plate 19 toward the bottom side of the exterior housing can 16. The positive electrode lead 20 is connected to a lower surface of an internal terminal plate 23 of the sealing assembly 17 by welding or the like, and a cap 27, which is a top plate of the sealing assembly 17 electrically connected to the internal terminal plate 23, becomes a positive electrode terminal. The negative electrode lead 21 is connected to a bottom inner surface of the exterior housing can 16 by welding or the like, and the exterior housing can 16 becomes a negative electrode terminal.

The exterior housing can 16 is a bottomed cylindrical metallic container having an opening on one side in an axial direction, as noted above. A gasket 28 is provided between the exterior housing can 16 and the sealing assembly 17, thereby sealability inside the battery and insulation between the exterior housing can 16 and the sealing assembly 17 are ensured. On the exterior housing can 16, a grooved portion 22 in which a part of a side wall thereof projects inward to support the sealing assembly 17 is formed. The grooved portion 22 is preferably formed in a circular shape along a circumferential direction of the exterior housing can 16, and supports the sealing assembly 17 with the upper face thereof. The sealing assembly 17 is fixed on the upper part of the exterior housing can 16 with the grooved portion 22 and with an end part of the opening of the exterior housing can 16 caulked to the sealing assembly 17.

The sealing assembly 17 has a stacked structure of the internal terminal plate 23, a lower vent member 24, an insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected at each of central parts thereof, and the insulating member 25 is interposed between each of the circumferential parts. If the internal pressure increases due to battery abnormality, the lower vent member 24 is deformed so as to push the upper vent member 26 up toward the cap 27 side and breaks, and thereby a current pathway between the lower vent member 24 and the upper vent member 26 is cut off. If the internal pressure further increases, the upper vent member 26 breaks, and gas is discharged through an opening of the cap 27.

Hereinafter, the positive electrode 11, the negative electrode 12, and the separator 13, which constitute the non-aqueous electrolyte secondary battery 10, specifically each core constituting the positive electrode 11 and the negative electrode 12, will be described in detail.

### [Positive Electrode]

The positive electrode 11 has a positive electrode core 30 and a positive electrode mixture layer 31 provided on a surface of the positive electrode core 30. For the positive electrode core 30, a foil of a metal stable within a potential range of the positive electrode 11, a film in which such a metal is disposed on a surface layer thereof, and the like may be used. A thickness of the positive electrode core 30 is, for example, greater than or equal to 5 µm and less than or equal to 35 µm, or greater than or equal to 10 µm and less than or equal to 20 µm. The positive electrode mixture layer 31 includes a positive electrode active material, a conductive agent, and a binder, and is preferably provided on both surfaces of the positive electrode core 30 except for a core exposed portion to which a positive electrode lead is to be connected. A thickness of the positive electrode mixture layer 31 is, for example, greater than or equal to 50 µm and less than or equal to 150 µm on one side of the positive electrode core 30. The positive electrode 11 may be produced by applying a positive electrode mixture slurry including the positive electrode active material, the conductive agent, the binder, and the like on the surface of the positive electrode core 30, and drying and subsequently compressing the coating to form the positive electrode mixture layers 31 on both surfaces of the positive electrode core 30.

For the positive electrode active material, a lithium-transition metal composite oxide is used. Examples of an element contained in the lithium-transition metal composite oxide and excluding Li include Ni, Co, Mn, Al, B, Mg, Ti, V, Cr, Fe, Cu, Zn, Ga, Sr, Zr, Nb, In, Sn, Ta, W, Si, and P. An example of the preferable lithium-transition metal composite oxide is a composite oxide containing at least one element selected from the group consisting of Ni, Co, and Mn. Specific examples thereof include a lithium-transition metal composite oxide containing Ni, Co, and Mn, and a lithium-transition metal composite oxide containing Ni, Co, and Al.

Examples of the conductive agent included in the positive electrode mixture layer 31 include a carbon material such as carbon black, acetylene black, Ketjenblack, and graphite. Examples of the binder included in the positive electrode mixture layer 31 include a fluororesin such as polytetrafluoroethylene (PTFE) and polyvinylidene fluoride (PVdF), polyacrylonitrile (PAN), a polyimide resin, an acrylic resin, and a polyolefin resin. The positive electrode mixture layer 31 may further include a cellulose derivative such as carboxymethylcellulose (CMC) or a salt thereof, polyethylene oxide (PEO), and the like.

For the positive electrode core 30, aluminum alloy foil is preferably used from the viewpoints of current collectability, processability, material cost, and the like. The aluminum alloy foil applied for the positive electrode core 30 contains aluminum as a main component, and at least one metal selected from the group consisting of iron, manganese, copper, magnesium, zinc, zirconium, silicon, chromium, titanium, and nickel, for example. An example of a content of aluminum is greater than or equal to 90 mass% and less than or equal to 99.9 mass%, or greater than or equal to 95 mass% and less than or equal to 99.5 mass%. The aluminum alloy foil preferably contains at least iron, and for example, greater than or equal to 1 mass% and less than or equal to 3 mass% of iron. Physical properties of the positive electrode core 30, such as the 0.2% proof stress, can be controlled by regulating a composition of the aluminum alloy, specifically a type and amount of the additive element such as iron. Typically, the higher the amount of the iron and the like added, the higher the 0.2% proof stress of the alloy foil.

The 0.2% proof stress of the positive electrode core 30 needs to be larger than the 0.2% proof stress of the negative electrode core 40. In this case, the amounts of plastic deformation of the positive electrode 11 and the negative electrode 12 with charge and discharge may be maintained to be approximately equal, or the amount of plastic deformation of the positive electrode 11 may be smaller than the amount of plastic deformation of the negative electrode 12, and thereby the generation of the region not facing the negative electrode in the positive electrode mixture layer 31, which does not face to the mixture layer of the negative electrode 12, may be more certainly inhibited. The 0.2% proof stress of the core may be determined from a stress-strain curve (SS curve) obtained by a tensile test of the core. Specifically, a point of a 0.2%-strain on the SS curve is used as a reference, and when a straight line parallel to a slope of a rise of the SS curve is drawn from the reference point, an intersection point between the straight line and the SS curve is a point of the 0.2% proof stress. The SS curve of the core is measured in accordance with JIS C5016-1994.

The 0.2% proof stress of the positive electrode core 30 (hereinafter, referred to as "0.2% proof stress P") is required to be larger than the 0.2% proof stress of the negative electrode core 40, and is preferably greater than or equal to 1.05 times the 0.2% proof stress of the negative electrode core 40 (hereinafter, referred to as "0.2% proof stress N"). In this case, the generation of the region not facing the negative electrode in the positive electrode mixture layer 31 is further easily inhibited. An upper limit of the ratio of the 0.2% proof stress P to the 0.2% proof stress N is not particularly limited, but excessively increasing the strength of the positive electrode core 30 may cause problems such as, for example, core breaking, and thereby the ratio is preferably 1.3 times or 1.2 times. An example of the preferable range of the ratio is greater than or equal to 1.05 and less than or equal to 1.20, or greater than or equal to 1.05 and less than or equal to 1.10.

The 0.2% proof stress P is, for example, greater than or equal to 120 N/mm² and less than or equal to 250 N/mm², or greater than or equal to 150 N/mm² and less than or equal to 200 N/mm². The 0.2% proof stress P within the above range facilitates the inhibition of the generation of the region not facing the negative electrode in the positive electrode mixture layer 31 with preventing failure such as core breaking. Note that, the relationship between the 0.2% proof stress P and the 0.2% proof stress N is important in the inhibition of the generation of the region not facing the negative electrode, and as long as the relationship of the 0.2% proof stress P > the 0.2% proof stress N is satisfied, the 0.2% proof stress P may be less than or equal to 120 N/mm². A breaking elongation percentage of the positive electrode core 30 is, for example, greater than or equal to 1% and less than or equal to 5%, or greater than or equal to 2% and less than or equal to 4%.

The 0.2% proof stress P may be regulated by the composition of the metal foil constituting the positive electrode core 30, as noted above. The 0.2% proof stress P may also be regulated by changing conditions of a heat treatment, rolling treatment, alloying treatment, and the like of the positive electrode core 30. For example, with the positive electrode core 30 made of aluminum alloy foil, a lower temperature in the heat treatment tends to increase the 0.2% proof stress P. The heat treatment may be performed by using a roll press at a temperature of less than or equal to 200°C, for example. The heat treatment of the positive electrode core 30 may be performed in a state where the positive electrode mixture layer 31 is not formed, or may be performed in a state of the positive electrode 11 in which the positive electrode mixture layer 31 is formed.

### [Negative Electrode]

The negative electrode 12 has a negative electrode core 40 and a negative electrode mixture layer 41 provided on a surface of the negative electrode core 40. For the negative electrode core 40, a foil of a metal stable within a potential range of the negative electrode 12, a film in which such a metal is disposed on a surface layer thereof, and the like may be used. A thickness of the negative electrode core 40 is, for example, greater than or equal to 3 µm and less than or equal to 20 µm, or greater than or equal to 5 µm and less than or equal to 15 µm. The negative electrode mixture layer 41 includes a negative electrode active material and a binder, and is preferably provided on both surfaces of the negative electrode core 40 except for a core exposed portion to which a negative electrode lead is to be connected. A thickness of the negative electrode mixture layer 41 is, for example, greater than or equal to 50 µm and less than or equal to 150 µm on one side of the negative electrode core 40. The negative electrode 12 may be produced, for example, by applying a negative electrode mixture slurry including the negative electrode active material, the binder, and the like on the surface of the negative electrode core 40, and drying and subsequently compressing the coating to form the negative electrode mixture layers 41 on both surfaces of the negative electrode core 40.

For the negative electrode active material, a material that reversibly occludes and releases lithium ions is used, and for example, a carbon-based active material is used. A preferable carbon-based active material is a graphite such as: a natural graphite such as flake graphite, massive graphite, and amorphous graphite; and an artificial graphite such as massive artificial graphite (MAG) and graphitized mesophase-carbon microbead (MCMB). For the negative electrode active material, an active material including at least one of an element that forms an alloy with Li, such as Si and Sn, and a compound containing such an element may be used, and the carbon-based active material and the above active material may be used in combination. As the negative electrode active material, the carbon-based active material and a Si-based active material are used in combination, for example. An example of the preferable Si-based active material is a compound in which Si fine particles are dispersed in a silicon oxide phase or a silicate phase such as lithium silicate.

For the binder included in the negative electrode mixture layer 41, a fluororesin, PAN, a polyimide, an acrylic resin, a polyolefin, and the like may be used as in the case of the positive electrode 11, but styrene-butadiene rubber (SBR) is preferably used. The negative electrode mixture layer 41 may further include CMC or a salt thereof, polyacrylic acid (PAA) or a salt thereof, polyvinyl alcohol (PVA), and the like. Among them, SBR and CMC or a salt thereof are preferably used in combination. Into the negative electrode mixture layer 41, a conductive agent may be added.

For the negative electrode core 40, copper foil is preferably used from the viewpoints of strength, current collectability, processability, material cost, and the like. The copper foil applied for the negative electrode core 40 may be any of a rolled copper foil manufactured by hot-rolling a highly pure ingot and an electrolytic copper foil manufactured by electroplating. The electrolytic copper foil is manufactured with controlling its crystal grain diameter by regulating a type and concentration of an additive, precipitation rate, and the like. Typically, a larger crystal grain diameter of the copper foil decreases the strength of the copper foil, and a smaller crystal grain diameter increases the strength of the copper foil. The crystal grain of the copper foil may be observed with a scanning electron microscope (SEM).

The 0.2% proof stress N of the negative electrode core 40 needs to be smaller than the 0.2% proof stress P of the positive electrode core 30. As noted above, setting the 0.2% proof stress N < the 0.2% proof stress P may inhibit the generation of the region not facing the negative electrode in the positive electrode mixture layer 31 even when the difference in size of the positive electrode 11 and the negative electrode 12 is small. The 0.2% proof stress N is, for example, less than or equal to 150 N/mm², but may be larger than 150 N/mm² as long as the condition of the 0.2% proof stress N < the 0.2% proof stress P is satisfied.

The 0.2% proof stress N may be regulated by appropriately changing a composition and conditions of a heat treatment, rolling treatment, alloying treatment, and the like of the metal foil constituting the negative electrode core 40. For example, with the negative electrode core 40 composed of copper foil, the 0.2% proof stress N can be increased by regulating the crystal grain diameter within an appropriate range by a heat treatment. In addition, the 0.2% proof stress N can be increased by adding iron, nickel, chromium, phosphorus, and the like into the negative electrode core 40.

### [Separator]

For the separator 13, a porous sheet having an ion permeation property and an insulation property is used. Specific examples of the porous sheet include a fine porous thin film, a woven fabric, and a nonwoven fabric. As a material for the separator 13, a polyolefin such as polyethylene, polypropylene, and a copolymer of ethylene and an α-olefin, cellulose, and the like are preferable. The separator 13 may have any of a single layer structure and a stacked structure. On a surface of the separator 13, a heat-resistant layer including inorganic particles, a heat-resistant layer constituted with a highly heat-resistant resin such as an aramid resin, a polyimide, and a polyamide imide, and the like may be formed.

### EXAMPLES

Hereinafter, the present disclosure will be further described with Examples, but the present disclosure is not limited to these Examples.

### <Example 1>

### [Production of Positive Electrode]

As a positive electrode core, aluminum alloy foil with 15 µm in thickness was used. A composition of the aluminum alloy was decided so as to have predetermined 0.2% proof stress and elongation percentage, and the alloy foil was heat-treated. A specimen with 12.5 mm × 63 mm was cut from the positive electrode core, and subjected to a tensile test by using a precision universal tester AG-I/50N-10kN, manufactured by SHIMADZU CORPORATION. The test conditions were in accordance with JIS C5016-1994. The 0.2% proof stress and breaking elongation percentage of the positive electrode core were specified from the obtained SS curve to be 152 N/mm² and 3%, respectively.

As a positive electrode active material, a composite oxide represented by LiNi_{0.88}Co_{0.09}Al_{0.03}O₂ was used. The positive electrode active material, acetylene black, and polyvinylidene fluoride were mixed at a mass ratio of 100:1:0.9, and an appropriate amount of N-methyl-2-pyrrolidone (NMP) was added to prepare a positive electrode mixture slurry. This positive electrode mixture slurry was applied on both surfaces of the positive electrode core, the coating was dried and then compressed by using a roller to produce a positive electrode in which positive electrode mixture layers were formed on both surfaces of the positive electrode core. A core exposed portion where no slurry was applied was formed at a central portion in a longitudinal direction of the positive electrode, and a positive electrode lead made of aluminum was ultrasonic-welded to this exposed portion.

### [Production of Negative Electrode]

As a negative electrode core, copper foil having a 0.2% proof stress of 141 N/mm², a breaking elongation percentage of 4%, and a thickness of 8 µm was used. The 0.2% proof stress and breaking elongation percentage of the negative electrode core were determined by the tensile test the same as the one in the positive electrode core.

As a negative electrode active material, graphite was used. The negative electrode active material, a dispersion of styrene-butadiene rubber (SBR), and carboxymethylcellulose (CMC) were mixed at a solid content mass ratio of 100:1:1, and an appropriate amount of water was added to prepare a negative electrode mixture slurry. This negative electrode mixture slurry was applied on both surfaces of the negative electrode core, the coating was dried and then compressed by using a roller to produce a negative electrode in which negative electrode mixture layers were formed on both surfaces of the negative electrode core. A core exposed portion where no slurry was applied was formed at an end portion in a longitudinal direction of the negative electrode, and a negative electrode lead made of nickel was ultrasonic-welded to this exposed portion.

### [Preparation of Non-Aqueous Electrolyte Liquid]

Into a mixed solvent in which ethylene carbonate (EC), ethyl methyl carbonate (EMC), and diethyl carbonate (DEC) were mixed at a volume ratio (25°C) of 3:3:4, LiPF₆ was dissolved at a concentration of 1 mol/L to prepare a non-aqueous electrolyte liquid.

### [Production of Non-Aqueous Electrolyte Secondary Battery]

The produced positive electrode and negative electrode were spirally wound with a separator interposed therebetween, and a winding-stop tape was attached to produce a wound electrode assembly. In this time, the negative electrode was wound so that the negative electrode lead was positioned on an outer peripheral side of the electrode assembly. A fine porous film made of polyethylene on which a heat-resistant layer including a polyamide and an alumina filler was formed on one surface was used for the separator. The electrode assembly was housed in a bottomed cylindrical exterior housing can with 21 mm in outer diameter and 70 mm in height, the prepared non-aqueous electrolyte liquid was injected, and then an opening of the exterior housing can was sealed with a gasket and a sealing assembly to produce a non-aqueous electrolyte secondary battery.

### <Comparative Example 1>

As a positive electrode core, aluminum alloy foil with 15 µm in thickness was used. A positive electrode core was prepared to produce a positive electrode and a non-aqueous electrolyte secondary battery in the same manner as in Example 1 except that the 0.2% proof stress was changed to 41 N/mm² by setting the temperature of the heat treatment of the alloy foil to be higher than that in Example 1.

With each of the batteries of Example and Comparative Example, charge and discharge were repeated under the following condition to determine elongation percentages of the electrode plate after 200 cycles and 500 cycles. Table 1 shows the evaluation results together with the 0.2% proof stress of the electrode plate core.

### [Cycle Test]

Each battery was charged at a constant current of 0.5 C until a battery voltage reached 4.2 V, and then charged at a constant voltage of 4.2 V until a charge current reached 0.05 C. Then, the battery was discharged at a constant current of 0.5 C until the battery voltage reached 3.0 V. This charge and discharge were specified as one cycle, and the charge and discharge were performed with 500 cycles.

### [Measurement of Elongation Percentage]

At the 1st cycle, 200th cycle, and 500th cycle of the above charge and discharge, X-ray CT photographing of each battery was performed by using inspeXio SMX-255CT FPD HR, manufactured by SHIMADZU CORPORATION. From the X-ray CT image of each battery, the elongation percentages of the electrode plate after 200 cycles and 500 cycles were measured by using Image-Pro Analyser, which was an image analysis software manufactured by Media Cybernetics, relative to a length of the electrode plate at the 1st cycle as a reference.

**[Table 1]**

| | 0.2% proof stress (N/mm²) | | Positive electrode elongation percentage (%) | | Negative electrode elongation percentage (%) | |
|---|---|---|---|---|---|---|
| | Positive electrode core | Negative electrode core | 200cyc | 500cyc | 200cyc | 500cyc |
| Example 1 | 152 | 141 | 0.65 | 1.01 | 0.63 | 0.94 |
| Comparative Example 1 | 41 | 141 | 1.04 | 1.90 | 0.59 | 1.04 |

As shown in Table 1, the battery of Example exhibited approximately same elongation percentages of the positive electrode and negative electrode. In contrast, the battery of Comparative Example exhibited a higher elongation percentage of the positive electrode than an elongation percentage of the negative electrode, and the difference in the elongation percentage was more obviously exhibited as increasing the number of cycles. That is, setting the 0.2% proof stress of the positive electrode core to be larger than the 0.2% proof stress of the negative electrode core may maintain the difference in the elongation percentage of the positive electrode and the negative electrode to be approximately same even with repeated charge and discharge. Alternatively, the elongation percentage of the positive electrode may also be achieved to be smaller than the elongation percentage of the negative electrode.

Since the elongation percentages of the positive electrode and negative electrode are approximately the same in the battery of Example, the generation of the region not facing the negative electrode in the positive electrode mixture layer may be more certainly inhibited in an end portion of the positive electrode even when the difference in size of the positive electrode and the negative electrode is set to be smaller than that of the conventional battery like Comparative Example. In other words, the battery of Example can use a larger positive electrode than that in the battery of Comparative Example, and an attempt can be made to increase the capacity.

### REFERENCE SIGNS LIST

10 Non-aqueous electrolyte secondary battery, 11 Positive electrode, 12 Negative electrode, 13 Separator, 14 Electrode assembly, 16 Exterior housing can, 17 Sealing assembly, 18, 19 Insulating plate, 20 Positive electrode lead, 21 Negative electrode lead, 22 Grooved portion, 23 Internal terminal plate, 24 Lower vent member, 25 Insulating member, 26 Upper vent member, 27 Cap, 28 Gasket, 30 Positive electrode core, 31 Positive electrode mixture layer, 40 Negative electrode core, 41 Negative electrode mixture layer

## Claims

1. A non-aqueous electrolyte secondary battery, comprising:
a positive electrode having a positive electrode core and a positive electrode mixture layer provided on the positive electrode core; and
a negative electrode having a negative electrode core and a negative electrode mixture layer provided on the negative electrode core, wherein
a 0.2% proof stress of the positive electrode core is larger than a 0.2% proof stress of the negative electrode core.

2. The non-aqueous electrolyte secondary battery according to claim 1, wherein the 0.2% proof stress of the positive electrode core is greater than or equal to 1.05 times the 0.2% proof stress of the negative electrode core.
